# EUROPEAN PATENT APPLICATION

(11) **EP 4 681 901 A1**
(43) Date of publication of application: **21.01.2026**
(21) Application number: 25187236.2
(22) Date of filing: 03.07.2025
(51) Int. Cl.: B29C 45/26, B29C 45/33, B29C 45/44

(54) **EASY-SLIDING CARRIAGE FOR INJECTION MOLDS**

(30) Priority: 17.07.2024 IT 202400016615
(71) Applicant: Mengoni, Michele, 62019 Recanati Macerata (IT)
(72) Inventor: Mengoni, Michele, 62019 Recanati Macerata (IT)
(74) Representative: Cacciamani, Clizia

(57) **Abstract**

The present invention relates to a carriage for injection molds comprising:
- a first rack and a second rack synchronized with each other;
- a toothed rod, provided with a first toothed wheel placed at a first end of the toothed rod, in correspondence with the first rack, and provided with a second toothed wheel placed at a second end of the toothed rod, opposite to the first end, in correspondence with the second rack, wherein the toothed rod is able to interact with the racks so that the rotation of the toothed rod allows the carriage to slide along the racks;
- a plurality of pins allowing the racks to be synchronized with each other;
- at least one plate for each toothed wheel fixed on the carriage and able to block the axial translation of the toothed rod.

In this way, it is possible to use much less space inside the mold to be able to take a smaller mold and consequently a smaller press and a lower hourly cost.

In fact, the use of toothed rods to ensure mechanical sliding on racks guarantees the carriage opening without getting it stuck and with the certainty that it moves back in a parallel way without jamming. Unwanted movements during movement are thus reduced. Furthermore, the plate fixed on the carriage holds the toothed rod still to block all its axial movements, except its rotation.

The present invention also refers to a system for injection molds including the carriage described above.

## Description

### Field of the invention

The present invention relates to the field of injection molds. In particular, the present invention relates to an easy-sliding carriage for injection molds.

### State of the art.

The mold is a piece of equipment allowing a certain shape to be given to a piece of material to be worked; it is typically made up of two or more half-shells, delimiting a space area having the shape of the piece to be obtained. The mold is specifically designed based on the transformation process used, such as, for example, injection, die casting, drawing, foaming.

Depending on the different type of processing, the characteristics and technology of the mold change. The molds are strictly linked to the type of material for which they will be used, on whose viscosity, temperature and characteristics numerous variables depend. The mold is a piece of equipment that works only if inserted inside a machine, called the "press".

Injection molding is an industrial manufacturing process wherein a plastic material is melted and injected at high pressure into a closed mold, which is opened after the product solidification.

The injection molding cycle begins when the mold is closed, which is then followed by the material injection, typically a polymer, into the mold cavity. Once the cavity is filled, a certain pressure value is maintained to compensate for the material volumetric variations. Once the part is sufficiently cool, the mold is opened and the molded part is ejected.

Undercuts often appear in the plastic product, which prevent the injection molded part ejection from the mold. These are typically protrusions, holes, cavities, or recessed areas in the part where the alignment is not perpendicular to the mold opening line. In order to be released, they require mechanical or hydraulic movements that are normally performed by carriages.

The carriages are normally moved by means of inclined columns and are positioned on guides, thus ensuring the proper sliding.

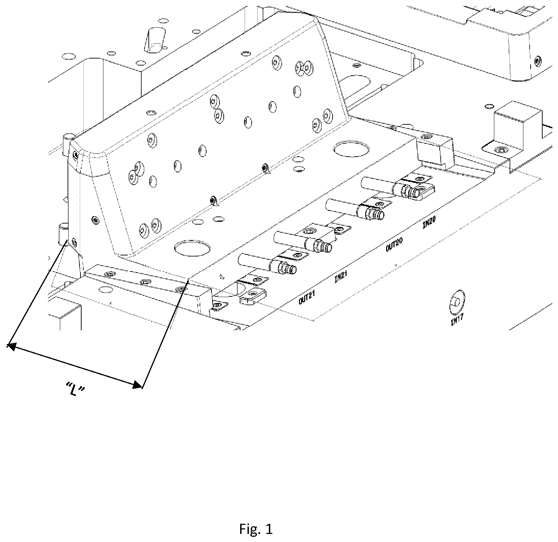

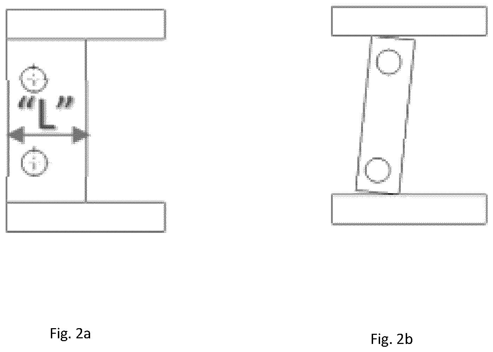

However, in the presence of large carriages (see Fig. 1), to ensure the carriage exits in the correct way it is necessary to significantly increase the length "L", in order to avoid unwanted movements (see Figs. 2a and 2b).

The Applicant has found that in these situations, it is necessary to use a larger mould to accommodate the carriage.

Therefore, the Applicant has posed the technical problem of how to make a carriage that uses much less space inside the mould, so as to be able to take a smaller mould and consequently a smaller press and a lower hourly cost.

### Summary of the invention

According to a first aspect, the present invention refers to a carriage for injection molds as indicated in claim 1.

The Applicant of the present application has in fact surprisingly found that the technical problem indicated above can be solved in an effective and reliable way by means of a carriage for injection molds comprising:
- a first rack and a second rack synchronized with each other;
- at least one toothed rod, provided with a first toothed wheel placed at a first end of the toothed rod, in correspondence with said first rack, and provided with a second toothed wheel placed at a second end of the toothed rod, opposite to said first end, in correspondence with said second rack, wherein said toothed rod is suitable for interacting with said racks so that the rotation of said toothed rod allows the carriage to slide along said racks;
- a plurality of pins allowing said racks to be synchronized with each other;
- at least one plate for each of said first toothed wheel and said second toothed wheel fixed on the carriage and suitable for blocking the axial translation of the toothed rod.

In this way, it is possible to use much less space inside the mold so as to be able to take a smaller mold and consequently a smaller press and a lower hourly cost.

In fact, the use of the toothed rod to ensure mechanical sliding on racks guarantees the carriage opening without getting it stuck and with the certainty that it moves back in a parallel manner without jamming. Unwanted movements during the carriage movement are thus reduced.

Furthermore, the plate fixed on the carriage keeps the toothed rod still to block all its axial movements, except its rotation.

According to a preferred embodiment, the carriage for injection molds of the present invention comprises a first rack and a second rack, arranged parallel to each other and in correspondence with the opposite ends of the carriage.

According to a preferred embodiment, each of said first rack and said second rack comprises an alternation of crests and depressions.

According to a preferred embodiment, the teeth of said first toothed wheel of the toothed rod are of such dimensions as to cooperate with the depressions of the corresponding first rack and the teeth of said second toothed wheel of the toothed rod are of such dimensions as to cooperate with the depressions of the corresponding second rack.

According to a preferred embodiment, the teeth of said first toothed wheel of the toothed rod are identical to the teeth of said second toothed wheel of the toothed rod and the depressions of said first rack are identical to the depressions of said second rack.

According to a preferred embodiment, said plurality of pins are all arranged at the same height h.

In this way, the racks are calibrated thanks to the pin always positioned at the same height.

According to a preferred embodiment, the injection mold carriage of the present invention further comprises a plurality of holes formed in each of said racks, wherein each of said holes is suitable for the insertion therein of a corresponding one of said plurality of pins.

In this way, each pin can be inserted into the corresponding hole to be fixed to the corresponding rack.

According to a preferred embodiment, said plate is provided with a fastening element suitable for further blocking the axial translation of the corresponding toothed rod.

According to a preferred embodiment, the injection mold carriage of the present invention further comprises a housing suitable for hosting said fastening element.

According to a preferred embodiment, the injection mold carriage of the present invention further comprises an alignment device arranged, respectively, between said depressions and said crests of the respective first rack and of the second rack.

According to a second aspect, the present invention relates to an injection mold system according to claim 10.

The Applicant of the present application has in fact surprisingly found that the above-mentioned technical problem can be solved effectively and reliably by means of an injection mold system that uses a mold carriage as shown above with reference to the first aspect of the present invention.

In fact, in this way, this system allows much less space to be used inside the mold so as to be able to take a smaller mold and consequently a smaller press and a lower hourly cost.

Further features and advantages of the present invention will be better highlighted by examining the following detailed description of preferred, but not exclusive, embodiments, illustrated only for indicative and non-limitative purposes with the support of the attached drawings. In particular, in such drawings:
- Fig. 1 shows an injection mold carriage according to the prior art;
- Fig. 2a shows a correct exit of the carriage of Fig. 1;
- Fig. 2b shows an incorrect exit of the carriage of Fig. 1;
- Fig. 3 shows an embodiment of a carriage of the present invention;
- Fig. 4 shows a detail of the carriage of Fig. 3, wherein the two racks are visible;
- Fig. 5 shows a detail of a rack of Fig. 4;
- Fig. 6 shows a detail of the rack of Fig. 5, wherein a pin is visible;
- Fig. 7 shows a detail of the rack of Fig. 5, wherein a hole for the pin shown in Fig. 6 is visible;
- Fig. 8 shows a detail of Fig. 5, wherein the plate housing is visible;
- Fig. 9 shows another detail of Fig. 5 according to another view, wherein the plate housing is visible.

### Detailed Description

The following detailed description refers to particular embodiments of the system of the present invention, without limiting its content.

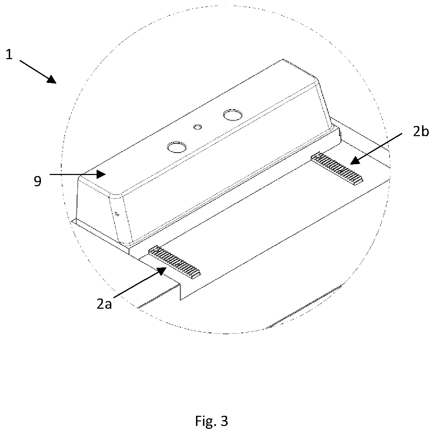

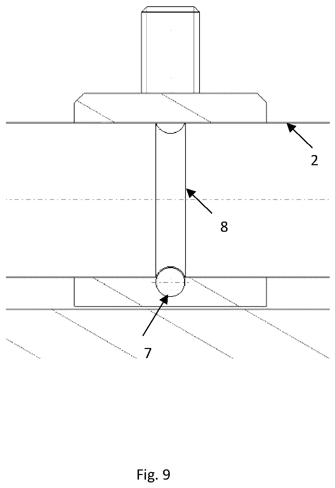

With reference to Figs. 3-9, an embodiment of the carriage 1 for injection molds of the present invention is described.

Fig. 3 shows the carriage 1 as a whole equipped with the first rack 2a and the second rack 2b, parallel to each other.

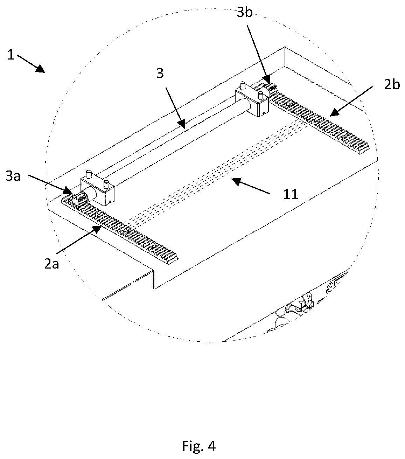

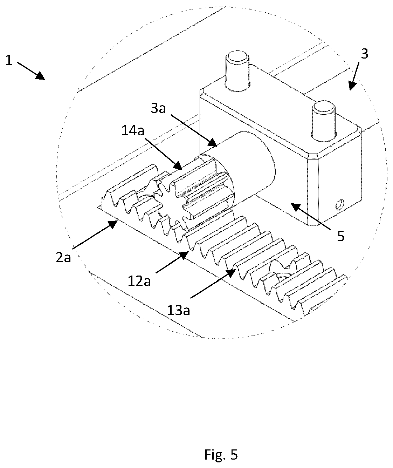

Fig. 4 shows the interior of the carriage 1 of Fig. 3, from which the cover element 9 has been removed; the first rack 2a and the second rack 2b are visible, parallel to each other, and arranged orthogonally to the toothed rod 3 of the carriage 1. The first toothed wheel 3a and the second toothed wheel 3b are also visible, respectively placed at the opposite ends of the toothed rod 3 of the carriage 1, in contact, respectively, with the first rack 2a and with the second rack 2b. The alignment 11 is also visible, respectively, between the depressions 12a and 12b and the crests 13a and 13b of the respective first rack 2a and second rack 2b (better shown in Fig. 5).

Fig. 5 shows in detail how the gear wheel 3a, provided with teeth 14a, interacts with the rack 2a, and in particular how it interacts with the depressions 12a and the crests 13a of the rack 2a. Fig. 5 also shows the plate 5, fixed on the carriage 1, allowing any axial translation of the toothed rod 3a to be blocked, thus allowing only the rotation of the gear wheel 3a. Similarly, although not shown in Fig. 5, the gear wheel 3b, provided with teeth 14b, interacts with the second rack 2b, and in particular interacts with the depressions 12b and the crests 13b of the second rack 2b. Operationally, following its rotation, the gear wheel 3a slides along the first rack 2a; at the same time, the gear wheel 3b slides along the second rack 2b. Consequently, thanks to the simultaneous rotation of the two gear wheels 3a and 3b, the carriage 1 can correctly slide along the first rack 2a and the second rack 2b, without any unwanted displacements occurring during the movement.

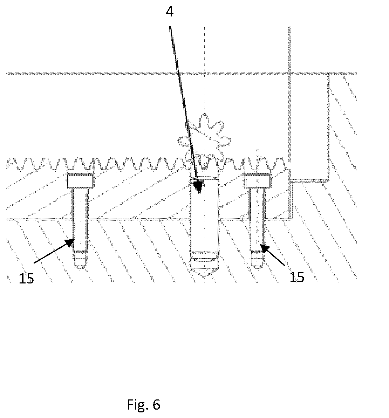

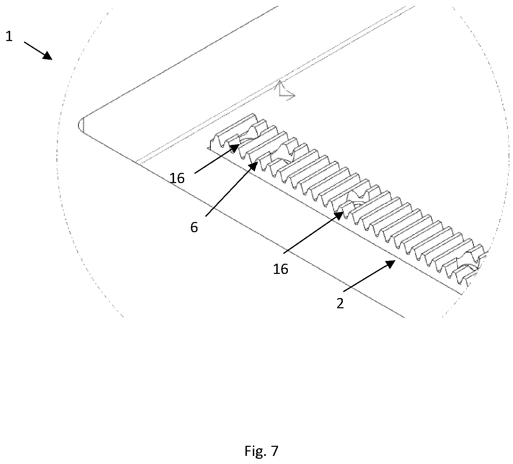

The first rack 2a and the second rack 2b are synchronized with each other by means of a plurality of pins 4, one of which is shown in Fig. 6. These pins 4 are all arranged at the same height and are housed using holes 6 obtained in the racks and shown in detail in Fig. 7.

In Fig. 6 and 7, screws 15 and housings 16 for screws 15 are also shown respectively, allowing the racks 2 to be fixed to the carriage 1.

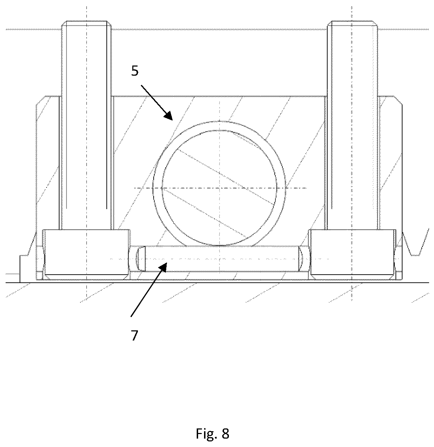

Fig. 8 shows a detail of the plate 5 of Fig. 5; to further prevent the gear wheels 3a and 3b from being subject to any axial translation, the fastening element 7 is inserted inside the plate, inserted in the appropriate housing 8.

The carriage 1 shown with reference to Figs. 3-9 therefore allows for the use of a much smaller space inside the mold compared to the carriages typically known in the art.

In fact, the use of toothed rods to ensure mechanical sliding on racks ensures the carriage opening without getting it stuck, thus reducing unwanted movements during movement.

The present invention also refers to a system for injection molds including the carriage described above.

Naturally, many modifications and variations of the preferred embodiments described above will be evident to those skilled in the art, still remaining within the scope of the invention.

Therefore, the present invention is not limited to the preferred embodiments described, illustrated only for exemplifying and non-limiting purposes, but is defined by the following claims.

## Claims

1. Carriage (1) for injection molds including:
- a first rack (2a) and a second rack (2b) synchronized with each other;
- at least one toothed rod (3) provided with a first toothed wheel (3a) placed at a first end of the toothed rod (3), in correspondence with said first rack (2a), and provided with a second toothed wheel (3b) placed at a second end of the toothed rod (3), opposite to said first end (3), in correspondence with said second rack (2b), wherein said toothed rod (3) is suitable for interacting with said racks (2a ,2b) so that the rotation of said toothed rod (3) allows the carriage (1) to slide along said racks (2a,2b);
- a plurality of pins (4) allowing said racks (2a,2b) to be synchronized with each other;
- at least one plate (5) for each of said first toothed wheel (3a) and of said second toothed wheel (2b) fixed on the carriage (1) and suitable for blocking the axial translation of the toothed rod (3).

2. Carriage (1) for injection molds according to claim 1, wherein said first rack (2a) and said second rack (2b) are arranged parallel to each other and in correspondence with the opposite ends of the carriage (1).

3. Carriage (1) for injection molds according to claim 1 or 2, wherein each of said first rack (2a) and said second rack (2b) comprises an alternation of depressions (12a,12b) and crests (13a,13b), and wherein the teeth (14a) of said first toothed wheel (3a) are of such dimensions as to cooperate with the depressions (12a) and the crests (13a) of the corresponding first rack (2a) and the teeth (14b) of said second toothed wheel (3b) are of such dimensions as to cooperate with the depressions (12b) and the crests (13b) of the corresponding second rack (2b).

4. Carriage (1) for injection molds according to claim 3, wherein the teeth (14a) of said first toothed wheel (3a) are identical to the teeth (14b) of said second toothed wheel (3b) and the depressions (12a) of said first rack (2a) are identical to the depressions (12b) of said second rack (2b).

5. Carriage (1) for injection molds according to any of the previous claims, wherein said plurality of pins (4) are all arranged at the same height (h).

6. Carriage (1) for injection moulds according to any of the previous claims, further comprising a plurality of holes (6) obtained in each of said racks (2), wherein each of said holes (6) is suitable for insertion into it of a corresponding one of said plurality of pins (4).

7. Carriage (1) for injection molds according to any of the previous claims, wherein said plate (5) is provided with a fastening element (7) suitable for further blocking the axial translation of the corresponding toothed rod (3).

8. Carriage (1) for injection molds according to claim 8, further including a housing (8) suitable for hosting said fastening element (7).

9. Carriage (1) for injection molds according to any of claims 3-8, further comprising an alignment device (11) arranged, respectively, between said depressions (12a,12b) and said crests (13a,13b) of the respective first rack (2a) and second rack (2b).

10. An injection mold system comprising a carriage according to any one of claims 1-9.
